# EUROPÄISCHE PATENTSCHRIFT

(11) **EP 3 502 464 B1**
(45) Veröffentlichungstag und Bekanntmachung des Hinweises auf die Patenterteilung: **10.04.2024**
(21) Anmeldenummer: 18213829.7
(22) Anmeldetag: 19.12.2018
(51) Int. Cl.: F03D 7/02, F03D 15/00

(54) **WINDENERGIEANLAGE MIT TRIEBSTRANG**
WIND ENERGY FACILITY WITH A DRIVETRAIN
ÉOLIENNE POURVUE DE CHAÎNE CINÉMATIQUE

(30) Priorität: 20.12.2017 DE 102017011804; 15.06.2018 DE 102018004793
(43) Veröffentlichungstag der Anmeldung: 26.06.2019
(73) Patentinhaber: Siemens Gamesa Renewable Energy Service GmbH, 20097 Hamburg (DE)
(72) Erfinder: Eusterbarkey, Carsten, 25813 Simonsberg (DE); Trede, Alf, 25885 Immenstedt (DE)
(74) Vertreter: Glawe, Delfs, Moll

(56) Entgegenhaltungen:
- EP-A1- 2 708 738
- EP-A1- 2 740 928
- EP-A1- 3 232 055
- DE-A1-102007 009 575
- DE-A1-102016 002 006
- JP-A- 2015 533 999
- US-A1- 2011 210 490
- US-A1- 2015 275 858

## Beschreibung

### Die Erfindung betrifft eine Windenergieanlage.

Bei bekannten Windenergieanlagen lässt sich ein um eine im Wesentlichen horizontale Achse drehbarer Rotor durch Wind in Rotation versetzen. In einer bekannten Ausführung ist der Rotor dabei fest mit einer Rotorwelle und über ein Getriebe mit einem Generator zur Umwandlung der Rotationsenergie des Rotors in elektrische Energie verbunden.

Zur drehbaren Lagerung des Rotors ist bekannt, den Triebstrang der Windenergieanlage auf einem Maschinenträger zu lagern. Dazu können Lager für die Rotorwelle und/oder Befestigungsvorrichtungen für das Getriebe, mit dem die Rotorwelle ggf. fest und spielfrei verbunden ist, am Maschinenträger angeordnet sein, um bspw. eine Drei- oder Vier-Punkt-Lagerung zu erreichen.

An dem Maschinenträger sind regelmäßig auch die weiteren, üblicherweise in der Gondel der Windenergieanlage angeordneten Komponenten unmittelbar oder indirekt über Tragstrukturen befestigt. Auch die Verkleidung der Gondel kann am Maschinenträger befestigt sein.

Der Maschinenträger ist regelmäßig an seiner Unterseite zur Verbindung mit dem an der Spitze des Turms der Windenergieanlage angeordneten Azimutlager ausgebildet, sodass der Maschinenträger und der darauf gelagerte Triebstrang zur Windnachführung des Rotors um eine vertikale Achse gedreht werden kann. Häufig sind die dafür erforderlichen Antriebe und Bremsen ebenfalls am Maschinenträger angeordnet.

Aufgrund der vom Maschinenträger aufzunehmenden und letztendlich über das Azimutlager in den Turm einzuleitenden Kräfte, die aufgrund der Masse des Rotors und des Triebstrangs, aber auch aufgrund von Windlasten erheblich sind, ist der Maschinenträger häufig als Gussteil ausgeführt, welches eine hohe Masse aufweist und aufgrund der daran neben dem Triebstrang anzuordnenden Komponenten, insbesondere der Antriebseinheiten für die Azimutverstellung, häufig eine komplexe und damit schwierig zu gießende Form aufweist. Die Antriebseinheiten müssen in der Folge häufig auch "über Kopf" montiert werden, da der Maschinenträger aufgrund seiner Masse und seines Volumens nicht in eine für die Montage der Antriebseinheiten vorteilhaftere Lage bewegt werden kann.

In dem Dokument DE 10 2007 009 575 A1 wird eine Windenergieanlage mit einem Maschinenhaus beschrieben, das einen Antriebsstrang und einen Maschinenträger aufweist. Der Maschinenträger umfasst einen Grundkörper, der mit einer Azimutdrehverbindung mittels Schrauben verbunden ist, wobei die Schrauben durch entsprechende Durchgangsbohrungen eines Bodenelements hindurch geführt sind. Das wannenförmige Bodenelement trägt vier Azimutantriebe.

Das Dokument DE 10 2016 002 006 A1 betrifft Verstelleinheiten zum Einstellen des Azimut-Winkels einer Windkraftanlagengondel oder des Pitch-Winkels von Rotorblättern. Die Verstelleinheiten umfassen zumindest zwei Stellantriebe zum Verdrehen zweier zueinander verdrehbar gelagerter Baugruppen. Des Weiteren ist eine Steuereinrichtung vorgesehen, die die Stellantriebe derart ansteuert, dass die Stellantriebe beim Verdrehen der beiden Baugruppen und/oder im Stillstand der Baugruppen zueinander verspannt werden.

Aus dem Dokument EP 3 232 055 A1 ist eine Windenergieanlage mit einem Triebstrang umfassend eine Rotorwelle und ein Planetengetriebe bekannt, Dabei ist die Rotorwelle auf zum einen mit einem Wälzlager an einer Tragstruktur gelagert und zum anderen mit einem zweireihigen Wälzlager mit Schrägstellung in X-Anordnung als Festlager in einem Getriebegehäuse.

Aufgabe der vorliegenden Erfindung ist es, eine insbesondere im Bereich des Maschinenträgers gegenüber dem Stand der Technik verbesserte Windenergieanlage zu schaffen.

Gelöst wird diese Aufgabe durch eine Windenergieanlage gemäß dem Hauptanspruch. Vorteilhafte Weiterbildungen sind Gegenstand der abhängigen Ansprüche.

Demnach betrifft die Erfindung eine Windenergieanlage mit einem Maschinenträger zur Aufnahme von Bauteilen zur Lagerung des Rotors der Windenergieanlage, wobei der Maschinenträger einen Flansch mit einem Lochbild identisch zum Lochbild des Azimutlagers der Windenergieanlage aufweist und eine Trägerplatte zur Aufnahme von wenigstens sechs Azimutantrieben vorgesehen ist, wobei die Trägerplatte ein Lochbild identisch zum Lochbild des Azimutlagers aufweist und derart zwischen Maschinenträger und Azimutlager angeordnet ist, dass die Verschraubung des Maschinenträgers am Azimutlager durch das Lochbild der Trägerplatte geführt ist, und wobei die Trägerplatte aus mehreren Segmenten zusammengesetzt ist.

Zunächst werden einige in Zusammenhang mit der Erfindung verwendete Begriffe erläutert.

Bei einem "Planetengetriebe" handelt es sich um ein Umlaufrädergetriebe, welches in jeder Getriebestufe als Getriebekomponenten ein innenverzahntes Hohlrad, ein außenverzahntes Zentralrad und einen Planetenträger mit wenigstens einem daran angeordneten Umlaufrad, das sowohl in die Verzahnung des Hohlrads als auch in die Verzahnung des Zentralrads eingreift, umfasst. In der Regel wird eine der Getriebekomponenten einer Getriebestufe eines Planetengetriebes - häufig das Hohlrad - festgehalten, während die beiden anderen Getriebekomponenten um eine gemeinsame Achse mit einem durch die Dimensionierung der einzelnen Räder des Getriebes vorgegebenen Übersetzungsverhältnis drehbar sind. Ein Planetengetriebe kann mehrere Getriebestufen aufweisen. Es ist aber auch möglich, dass ein Planetengetriebe nur eine Getriebestufe umfasst, wobei dann die erste Getriebestufe gleichzeitig die einzige Getriebestufe ist.

Bei einem "Toroidalrollenlager" - auch "CARB-Lager" oder "CARB-Toroidalrollenlager" genannt - handelt es sich um einreihige Wälzlager mit symmetrischen, relativ langen, leicht balligen Rollen und Torus-förmig profilierten Laufbahnen. Entsprechende Lager können ausschließlich Radiallasten aufnehmen, weshalb sie grundsätzlich nur als Loslager eingesetzt werden können.

Der Begriff "Momentenlager" bezeichnet ein Drehlager, welches die Übertragung von axialen und radialen Kräften sowie die Aufnahme von Momenten, die nicht um die Drehachse wir ken, ermöglicht. Insbesondere kann ein Momentenlager auf eine darin gelagerte Welle einwirkende Biegemomente aufnehmen.

Eine Verbindung gilt dann als "fest und spielfrei", wenn bei üblicherweise zu erwartenden Belastungen der Verbindung praktisch keine Relativbewegung zwischen den so verbundenen Komponenten auftritt.

Mit "Lochbild" ist die Anordnung der Bohrungen für eine Schraubenverbindung zwischen zwei Bauteilen bezeichnet, wobei nur diejenigen Bohrungen zum Lochbild gehören, durch die im montierten Zustand auch tatsächlich Schrauben geführt sind. Nicht für die Verschraubung genutzte Bohrungen gehören in Zusammenhang mit der Erfindung nicht zum Lochbild. Sind die Bohrungen eines Lochbildes auf einem Kreis angeordnet, kann das Lochbild über die Angabe der Durchmesser der einzelnen Bohrungen, den Durchmesser des Lochkreises der Bohrungen, der Anzahl der Bohrungen auf dem Lochkreis und der Stellung der Bohrungen auf dem Lochkreis.

Elemente - wie bspw. Bohrungen auf einem Lochkreis oder Aufhängungselemente um die Rotorachse - gelten dann als "über den Umfang gleichverteilt", wenn der Winkelabstand zwischen jeweils benachbarten Elementen immer gleich groß ist.

Erfindungsgemäß erfolgt die Befestigung der Azimutantriebe nicht mehr unmittelbar am Maschinenträger, sondern vielmehr über die erfindungsgemäß vorgesehene Trägerplatte, die zwischen Maschinenträger und Azimutlager angeordnet ist, sodass die Verschraubung des Maschinenträgers am Azimutlager durch die Trägerplatte geführt ist. In der Folge muss der Maschinenträger gegenüber dem Stand der Technik keine Halterungen für die Azimutantriebe mehr aufweisen, was die Komplexität und damit die Herstellung des Maschinenträgers insbesondere als Gussteil vereinfacht.

Die Trägerplatte zeichnet sich durch ein Lochbild aus, welches den Lochbildern am Flansch des Maschinenträgers sowie des Azimutlagers entspricht, sodass die Trägerplatte durch die zur Befestigung des Maschinenträgers am Azimutlager vorgesehene Verschraubung ohne Weiteres mit eingespannt werden kann. In der Folge bedarf es keiner gesonderten Befestigung der Trägerplatte.

Die Trägerplatte weist darüber hinaus noch eine über die übliche Anzahl von Azimutantrieben hinausgehende Anzahl an Aufnahmen dafür auf, die vorzugsweise auch alle mit einem Azimutantrieb versehen sind. Im Stand der Technik werden bei einer Befestigung der Azimutantriebe unmittelbar am Maschinenträger häufig nur vier Antriebe vorgesehen, um die Anzahl der Aufnahmen dafür am Maschinenträger und damit dessen Komplexität in der Formgebung möglichst gering zu halten. Bei der erfindungsgemäßen Trägerplatte sind hingegen mehr Aufnahmen für Azimutantriebe vorgesehen. Durch die zusätzlichen Azimutantriebe können die an den einzelnen Antrieben in die Trägerplatte eingebrachten Reaktionskräfte und daraus resultierende Krempelmomente reduziert werden, sodass die Trägerplatte eine gegenüber einer theoretischen Platte mit nur vier Azimutantrieben geringere Dicke aufweisen kann.

Es ist bevorzugt, wenn die Trägerplatte zur Aufnahme von acht oder mehr Azimutantrieben ausgestaltet ist. Auch hier gilt, dass vorzugsweise jeweils ein Azimutantrieb in jeder dafür vorgesehenen Aufnahme der Trägerplatte vorgesehen ist.

Auf der von der Aufnahme der Azimutantriebe abgewandten Seite kann die Trägerplatte wenigstens fünf, vorzugsweise wenigstens acht Aufnahmen für Azimutbremsen aufweisen, wobei vorzugsweise jeweils eine Azimutbremse in jeder dafür vorgesehenen Aufnahme vorgesehen ist.

Die Montage der Azimutantriebe und/oder Azimutbremsen ist regelmäßig vereinfacht, da diese Komponenten bereits vor der Anordnung der Trägerplatte zwischen Maschinenträger und Azimutlager montiert werden können, wobei regelmäßig insbesondere keine "Über-Kopf"-Montage erforderlich ist.

Die Trägerplatte ist aus mehreren Segmenten zusammengesetzt, sodass sie bspw. für Transportzwecke zeitweise zerlegt werden kann. In der Folge lassen sich die Transportma-βe, die ansonsten maßgeblich durch den Durchmesser des Lochkreises der Trägerplatter, der wiederum durch den Durchmesser des Azimutlagers der Windenergieanlage vorgegebenen ist, deutlich reduzieren.

Es ist bevorzugt, wenn die Trägerplatte aus einem Material mit gegenüber dem Material des Maschinenträgers höherer Festigkeit ist. Dadurch kann die Trägerplatte besser an die zu erwartenden Kraftverläufe angepasst werden. Durch die erfindungsgemäße Ausführung der Trägerplatte getrennt von dem Maschinenträger ist der Einsatz von höherfestem und in der Regel kostenintensiverem Material auf die Trägerplatte beschränkt, während der Maschinenträger weiterhin aus dem bekannten und im Stand der Technik verwendeten Gussmaterial sein kann.

Die erfindungsgemäße Trägerplatte ist besonders bevorzugt für Windenergieanlage nach einem der vorhergehenden Ansprüche, deren Triebstrang eine Rotorwelle und ein Planetengetriebe mit einer ersten Getriebestufe umfasst, wobei die Rotorwelle mit dem Planetenträger der ersten Getriebestufe fest und spielfrei verbunden ist, am Maschinenträger wenigstens eine erste und eine zweite Tragstruktur befestigt ist, wobei an der ersten Tragstruktur ein Toroidalrollenlager zur Lagerung der Rotorwelle auf einem von der ersten Getriebestufe abgewandten Seite angeordnet ist und an der zweiten Tragstruktur ein Gehäuse des Planetengetriebes über wenigstens drei ringförmig um die Rotorachse angeordnete elastische Aufhängungselemente befestigt ist, wobei der mit der Rotorwelle fest und spielfrei verbundene Planetenträger mit einem Momentenlager als Festlager gelagert ist, dessen Außenring mit dem Gehäuse verbunden ist.

Bei einer entsprechenden Windenergieanlage ist also eine sog. Drei-Punkt-Lagerung realisiert. Dabei wird sämtlicher vom Wind auf den Triebstrang ausgeübter Rotorschub sowie evtl. Biegemomente über das an dem fest und spielfrei mit der Rotorwelle verbundenen Planetenträger angeordnete Festlager über die elastischen Aufhängungselemente in die zweite Tragstruktur eingebracht. Bei dem Toroidalrollenlager handelt es sich um ein Loslager, welches neben Gewichtskräften im Wesentlichen noch zur Aufnahme von auf den Triebstrang einwirkenden Nick- und Giermomenten dient. Aufgrund seiner spezifischen Ausgestaltung ist das Toroidalrollenlager sehr robust bei Winkelfehlern und Axialspiel, weshalb die erfindungsgemäße Lageranordnung keine hochgenaue Ausrichtung des Loslagers gegenüber dem Festlager - wie bei Lagerkonzepten aus dem Stand der Technik bekannt - erforderlich ist. Mögliche Abweichungen von einer theoretisch idealen Ausrichtung werden in der Regel durch das Toroidalrollenlager problemlos ausgeglichen. Gleiches gilt für etwaige Lageveränderung durch mögliche Verformung der elastischen Aufhängungselemente während des Betriebs der Windenergieanlage. Dabei lässt das Toroidalrollenlager durch seine kompakte Bauweise und Robustheit auch bei Windenergieanlagen durchaus üblichen Wellendurchmessern von mehr als 2,5 m gut einsetzen.

Bei dem Gehäuse handelt es sich vorzugsweise um das Getriebegehäuse, mit dem die weiteren Komponenten der ersten und ggf. weiteren Getriebestufen des Planetengetriebes fest oder drehbar verbunden sind. In diesem Fall wird aufgrund der Verbindung von Außenring des Momentenlagers und Gehäuse, die - auch bei anderen Ausführungen - vorzugsweise fest und spielfrei ist, eine solche Lagerung des Planetenträgers der ersten Getriebestufe gegenüber dem Getriebegehäuse sichergestellt, dass sich die Lage der Rotationsachse des Planetenträgers gegenüber dem Getriebegehäuse und somit auch der übrigen Komponenten des Planetengetriebes auch unter Belastung praktisch nicht verändert. Dies gilt insbesondere auch für das innenverzahnte Hohlrad und das außenverzahnte Zentralrad der ersten Getriebestufe. Das Hohlrad kann dabei bspw. fest mit dem Gehäuse verbunden sein, während das außenverzahnte Zentralrad durch geeignete Lager drehbar gegenüber dem Getriebegehäuse gelagert ist.

Aufgrund der erfindungsgemäßen Ausbildung des Festlagers als Momentenlager lässt sich demnach eine genaue axiale Führung zwischen Getriebegehäuse und Planetenträger erreichen, d. h. diese lassen sich bei geeigneter Ausführung des Lagers in axialer Richtung praktisch nicht mehr relativ zueinander bewegen. Auch können Kippmomente vom Lager aufgenommen werden. In der Folge kann eine schädliche Lageveränderung der einzelnen Komponenten der ersten Getriebestufe zueinander selbst bei großer Belastung des Triebstrangs vermieden werden. Auf eine Kupplung, wie sie im Stand der Technik häufig erforderlich ist, um Verformungen der Rotorwelle vom Getriebe fernzuhalten, kann verzichtet werden.

Es ist bevorzugt, wenn sechs oder mehr, weiter vorzugsweise sechzehn oder mehr elastische Aufhängungselemente vorgesehen sind, wobei die Aufhängungselemente vorzugsweise über den Umfang gleichverteilt sind. Durch eine entsprechende Anzahl und Anordnung an elastischen Aufhängungselementen kann der Kraftfluss durch das Gehäuse gut verteilt und besonders hohe Kraftspitzen im Gehäuse vermieden werden.

Es ist bevorzugt, wenn die elastischen Aufhängungselemente zylindrisch sind. Eine solche Bauform ermöglicht eine einfache und kostengünstige Herstellung bei gleichzeitiger hohen Lastaufnahmekapazität, insbesondere in Radialrichtung des Zylinders. Die fragliche Bauform ist auch unter der Bezeichnung Ultra-Buchse bekannt.

Weiter bevorzugt ist es, wenn die elastischen Aufhängungselemente mit ihrer Zylinderachse parallel zur Rotorachse angeordnet sind. Diese Anordnung ermöglicht eine gute Aufnahme von Nick-, Gier- und Drehmomenten, wobei der Rotorschub in Axialrichtung der elastischen Aufhängungselemente aufgenommen. Außerdem kann durch die genannte Anordnung in der Regel eine einfache Austauschbarkeit auch einzelner Aufhängungselemente gewährleistet werden.

Es ist bevorzugt, wenn die Elastizität der elastischen Aufhängungselemente richtungsabhängig derart ausgestaltet ist, dass in Umfangsrichtung eine ausreichende Steifigkeit vorhanden ist, um das Getriebedrehmoment allein über die Aufhängungselemente vollständig in die zweite Tragstruktur zu leiten. Durch eine entsprechende Ausgestaltung der Aufhängungselemente kann auf eine separate Drehmomentstütze für das Getriebe verzichtet werden.

Durch den Wegfall der seitlichen Drehmomentstützen kann der Triebstrang deutlich schlanker ausgeführt werden, wodurch die Transportbreite reduziert und der Transport des Triebstrangs vereinfacht wird.

Die Aufhängungselemente können bspw. aus Gummi sein. Die zweite Tragstruktur kann sich ringförmig um die Rotorwelle erstrecken.

Bei dem Momentenlager kann es sich um ein Gleitlager oder ein Wälzlager handeln. Ist ein Wälzlager vorgesehen, ist bevorzugt, wenn es sich um ein zweireihiges Kegelrollenlager mit Schrägstellung in X- oder O-Anordnung handelt. Entsprechende Momentenlager gestatten eine spielfreie und hoch belastbare Lagerung, bei der auch die nötige Verspannung der einzelnen Lagerkomponenten aufgrund der geringen Verspannungslänge im Wesentlichen unempfindlich gegen etwaige Temperatureffekte ist. Die O-Anordnung zeichnet sich gegenüber einem vergleichbaren Lager mit X-Anordnung durch eine noch höhere Momentenaufnahmefähigkeit aus.

Es ist bevorzugt, wenn das Kegelrollenlager einen, vorzugsweise induktiv gehärteten, geteilten Außen- oder Innenring aufweist, wobei die Teile des geteilten Rings vorzugsweise Bohrungen für eine Verschraubung aufweisen. Durch eine Bohrung kann die Montage, Verspannung und/oder axiale Fixierung des Momentenlagers erleichtert werden. Das Momentenlager kann dabei über das Gehäuse mit den elastischen Aufhängungselementen verbunden sein. In diesem Fall kann das Momentenlager bspw. auf bekannte Weise in dem Gehäuse gelagert und mit diesem verbunden sein. Da bei diesem Verbund die elastischen Aufhängungselemente am Gehäuse angreifen, erfolgt der Kraftfluss vom Momentenlager über das Gehäuse und die Aufhängungselemente in die zweite Tragstruktur.

Es ist aber auch möglich, dass den Außenring des Momentenlagers direkt mit den elastischen Aufhängungselementen verbunden ist, um eine direkte Kraftübertragung der aus der Lagerung resultierenden Kräfte in die Tragstruktur zu ermöglichen. Da in diesem Fall das Gehäuse jedoch weiterhin mit dem Außenring des Lagers verbunden ist, werden auch die aufgrund des Gewichts des Planetengetriebes und ggf. weiterer damit verbundener Komponenten über den Außenring des Lagers und die Aufhängungselemente in die zweite Tragstruktur eingeleitet.

Weiter sieht eine bevorzugte Ausführungsform vor, dass der eine Teil des geteilten Rings gewindefreie Durchgangsbohrungen und der andere Teil, vorzugsweise der vom Toroidalrollenlager weiter entfernte Teil des geteilten Rings Bohrungen mit Innengewinde aufweist. Der fragliche Ring besteht in diesem Fall also aus zwei Ringen, die konzentrisch angeordnet den Innen- oder Außenring bilden. Die Trennfuge zwischen den beiden Ringen ist dabei vorzugsweise so ausgestaltet, dass sich durch Verringerung der Fugenbreite, vorzugsweise auf null, oder eine entsprechende Verspannung der beiden Teile eine Lagervorspannung erreichen lässt, durch die dann u. a. eine relative axiale Bewegung des Innen- und Außenrings verhindert werden kann. Hierzu ist bei einer X-Anordnung zumindest der Außenring geteilt vorzusehen, bei einer O-Anordnung der Innenring. Durch eine entsprechende Ausgestaltung lässt sich eine einfache Montage und Verspannung des Kegelrollenlagers erreichen.

Der Außenring besteht in diesem Fall also aus zwei Ringen, die konzentrisch angeordnet den Außenring bilden. Die Trennfuge zwischen den beiden Ringen ist dabei vorzugsweise so ausgestaltet, dass sich durch Verringerung der Fugenbreite, vorzugsweise auf null, oder eine entsprechende Verspannung der beiden Teile des Außenrings eine Lagervorspannung erreichen lässt, durch die dann u. a. eine relative axiale Bewegung des Innen- und Außenrings verhindert werden kann.

Es kann auch vorgesehen sein, dass der Planetenträger der ersten Getriebestufe auf der von der Rotorwelle abgewandten Seite des zweireihigen Wälzlagers mit einem als Loslager ausgestalteten Stützlager im Getriebegehäuse gelagert ist. Durch eine solche zusätzliche Lagerung wird eine Fest-Los-Lagerung des Planetenträgers im Getriebegehäuse erreicht. Dadurch wird die Sicherheit, dass sich die Lage der Rotationsachse des Planetenträgers gegenüber dem Getriebegehäuse auch unter Belastung nicht verändert, weiter erhöht. Bei dem Stützlager kann es sich um ein Wälzlager, vorzugsweise um ein Zylinderrollenlager handeln. Das Stützlager dient dann in erste Linie dazu, dass Eigengewicht des Getriebes abzufangen. Dies ist insbesondere dann von Vorteil, wenn an das Planetengetriebe noch eine zusätzliche Stirnradgetriebestufe oder ein Generator direkt angeflanscht sind. Da sich dabei der Getriebeschwerpunkt weit nach hinten, also von der Rotorwelle weg, verschiebt, müsste ohne das zusätzliche Stützlager das komplette Getriebegewicht von dem Momentenlager abgefangen werden. Hingegen kann bei Ausführungsformen, bei denen das Getriebe sehr kompakt baut auf das Stützlager verzichtet werden, da sowohl das Getriebegewicht als auch das resultierende und vergleichsweise kleine Getriebegewichtsmoment vollständig von dem Momentenlager aufgenommen werden kann.

Die Erfindung wird nun anhand einer vorteilhaften Ausführungsform unter Bezugnahme auf die beigefügten Zeichnungen beispielhaft beschrieben. Es zeigen:
- Figur 1:: eine schematische Teildarstellung des Triebstrangs eines ersten Ausführungsbeispiels einer erfindungsgemäßen Windenergieanlage in Schnittansicht;
- Figur 2:: eine schematische Detailansicht der Anordnung der elastischen Aufhängungselemente der Windenergieanlage aus Figur 1;
- Figur 3a, b:: schematische Ansichten der Trägerplatte der Windenergieanlage aus Figur 1 mit daran befestigten Azimutantrieben und -bremsen; und
- Figur 4:: eine Detailschnittansicht der Trägerplatte aus Figur 3a, b im montiertem Zustand.

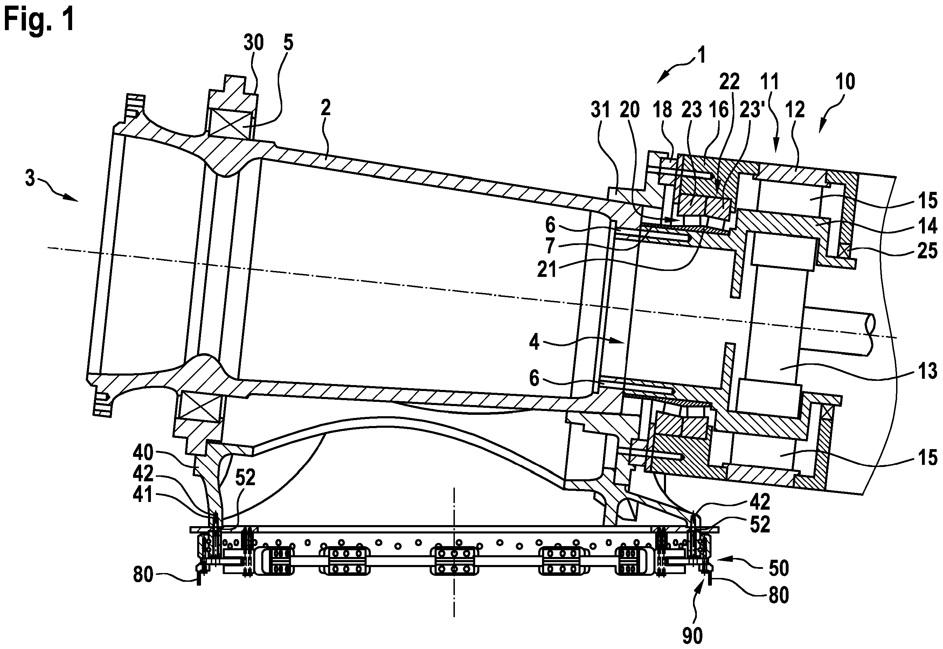

In Figur 1 ist eine besonders bevorzugte Ausführungsform einer erfindungsgemäßen Windenergieanlage schematisch mit den für die vorliegende Erfindung relevanten Teilen dargestellt.

Der Triebstrang 1 umfasst eine Rotorwelle, an deren einen Ende 3 der Rotor der Windenergieanlage (nicht dargestellt) befestigt wird. Am anderen Ende 4 der Rotorwelle 2 ist ein Planetengetriebe 10 angeordnet, von dem lediglich die erste Getriebestufe 11 dargestellt ist.

Wie später noch näher erläutert, ist der Triebstrang 1 über eine erste und eine zweite Tragstruktur 30, 31 an einem Maschinenträger 40 gelagert, der als Gussteil ausgeführt ist. An seiner Unterseite weist der Maschinenträger 40 einen Flansch mit in einem Lochbild 41 angeordneten Sackbohrungen 42 auf, wobei das Lochbild 41 mit demjenigen des Innenrings des Azimutlagers (in Figur 1 nur angedeutet) übereinstimmt, sodass der Maschinenträger 40 grundsätzlich auf bekannte Art und Weise an dem Azimutlager 90 befestigt werden kann.

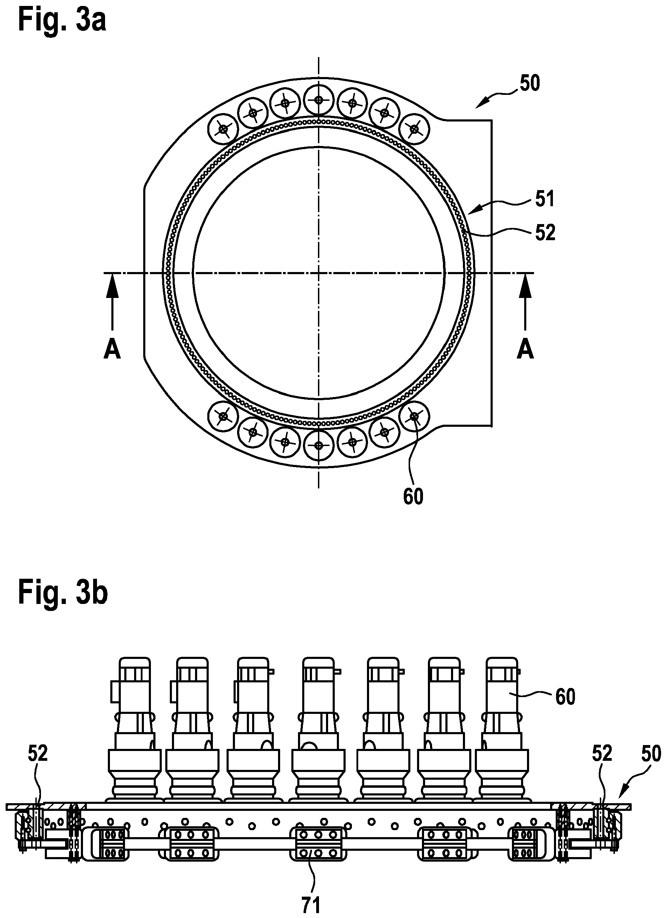

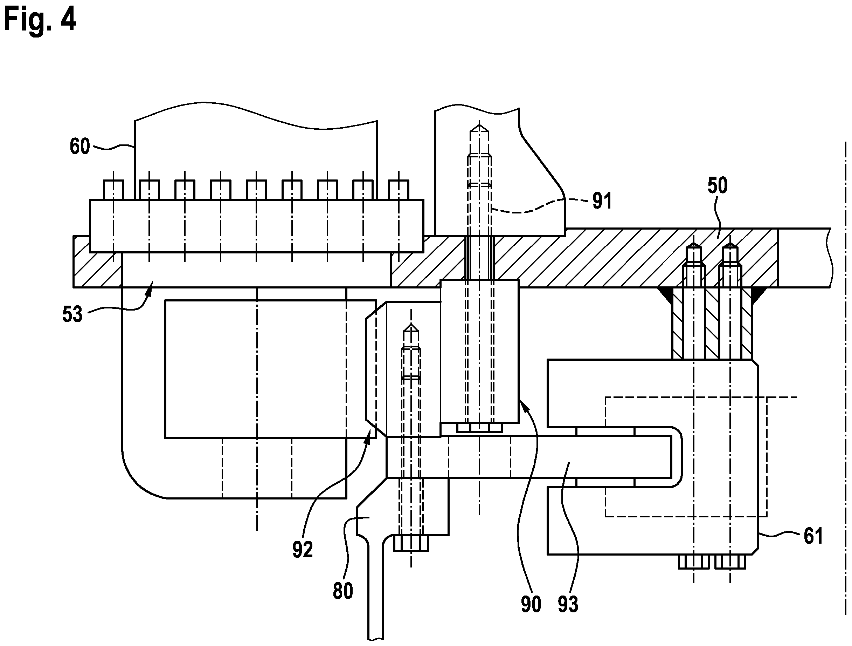

Zwischen Maschinenträger 40 und Azimutlager 90 ist eine Trägerplatte 50 angeordnet. Die Trägerplatte 50 ist in Figuren 3a, b nochmals isoliert dargestellt, während sich in Figur 4 eine Detaildarstellung der Anordnung aus Maschinenträger 40, Trägerplatte 50 und Azimutlager 90 findet.

Die Trägerplatte 50 weist ebenfalls ein Lochbild 51 aus Durchgangsbohrungen 52 auf, welches dem Lochbild 41 des Maschinenträgers 40 bzw. demjenigen des Azimutlagers 90 entspricht. Die Trägerplatte 50 kann daher derart zwischen Maschinenträger 40 und Azimutlager 90 angeordnet werden, dass die bekannte Verschraubung 91 des Maschinenträgers 40 am Azimutlager 90 durch das Lochbild 51 der Trägerplatte 50 geführt ist, womit die Trägerplatte 50 sicher befestigt ist.

Wie in Figur 3a, b zu sehen, sind auf der Trägerplatte 50 insgesamt 14 Azimutantriebe 60 in entsprechenden Aufnahmen 53 vorgesehen, die in eine am mit dem Turm 80 der Windenergieanlage fest verbundenen Innenring des Azimutlagers 90 vorgesehene Innenverzahnung 92 eingreifen (vgl. Figur 4), wodurch die Azimutverstellung der Windenergieanlage bewerkstelligt werden kann. Auf der Unterseite der Trägerplatte 50 sind insgesamt zwölf als Bremszangen ausgebildete Azimutbremsen 61 vorgesehen, mit der die Windenergieanlage durch Zusammenwirken mit einer Bremsscheibe 93 in einer vorgegebenen Azimutstellung gesichert werden kann (vgl. Figur 4).

Durch die Anordnung der Azimutantriebe 60 und der Azimutbremsen 61 an der Trägerplatte 50 kann auf eine komplexere und damit in der Herstellung kostenintensivere Formgebung des Maschinenträgers 40 verzichtet werden. Gleichzeitig können durch die jeweils gewählte Anzahl an Azimutantrieben 60 und Azimutbremsen 61 die auf die Trägerplatte 50 einwirkenden Krempelmomente gering gehalten werden, sodass weder eine besonders große Dicke der Trägerplatte 50 noch aufwendige Verstärkungen der Trägerplatte 50 erforderlich sind. Dies gilt insbesondere, da die Trägerplatte 50 aus einem Material ist, welches gegenüber dem Material des Maschinenträgers 40 eine höhere Festigkeit aufweist. Die Trägerplatte 50 kann beispielsweise vorteilhaft aus einem Feinkornbaustahl, wie etwa dem Feinkornbaustahl S690 QL, sein.

Aus Transportgründen kann die in Fig. 3a dargestellte Trägerplatte 50 entlang der Schnittlinie A-A in zwei Segmente teilbar sein. Alternativ oder zusätzlich können auch eine oder mehrere Teilung(en) entlang einer anderen Durchmesserlinie des Lochbilds 51 vorgesehen sein, wobei die Teilung(en) bevorzugt zwischen den Ausnehmungen 53 für die Azimutantriebe 60 verlaufen und diese insbesondere nicht schneiden.

Bei der in Figur 1 dargestellten besonders bevorzugten Ausführungsform umfasst die erste Getriebestufe 11 ein innenverzahntes Hohlrad 12, ein außenverzahntes Zentralrad 13 und einen Planetenträger 14 mit daran angeordneten Umlaufrädern 15, die sowohl in die Verzahnung des Hohlrads 12 als auch in die Verzahnung des Zentralrads 13 eingreifen, als Getriebekomponenten. Das Hohlrad 12 ist fest mit dem Getriebegehäuse 16 verbunden, während das Zentralrad 13 durch aus Gründen der Übersichtlichkeit nicht dargestellte Wälzlager drehbar gegenüber dem Getriebegehäuse 16 gelagert ist. Auf die Lagerung des Planetenträgers 14 im Getriebegehäuse 16 durch das zweireihige Wälzlager 20 und das (optionale) Stützlager 25 wird nachfolgend noch näher eingegangen.

Die Rotorwelle 2 ist im Bereich des zur Verbindung mit dem Rotor vorgesehenen Endes 3 durch ein Toroidalrollenlager 5 an der ersten, ringförmigen und die Rotorwelle 2 vollständig umschließende Tragstruktur 30 gelagert. An ihrem anderen Ende 4 ist die Rotorwelle 2 durch eine nur angedeutete Verschraubung 6 fest und spielfrei mit dem Planetenträger 14 der ersten Getriebestufe 11 verbunden.

Durch die Verschraubung 6 und die Distanzbuchse 7 wird weiterhin der Innenring 21 des Wälzlagers 20 durch Einspannung fest an dem Planetenträger 14 der ersten Getriebestufe 11 gesichert. Das Wälzlager 20 ist als zweireihiges Kegelrollenlager mit einer Schrägstellung in X-Anordnung ausgestaltet. Der Außenring 22 des zweireihigen Wälzlagers 20 ist in zwei Ringe 23, 23' geteilt. Durch die in Figur 1 dargestellte Einspannung des Außenrings 22 werden die beiden Ringe 23, 23' so miteinander verspannt, dass eine Lagervorspannung erreicht wird, durch die axiale Relativbewegungen des Innenringes 21 gegenüber dem Außenring 22 verhindert werden kann. Alternativ zu dem dargestellten zweireihigen Kegelrollenlager mit einer Schrägstellung in X-Anordnung ist auch eine Schrägstellung in O-Anordnung oder ein als Momentenlager ausgestaltetes Gleitlager möglich.

Alternativ zu der dargestellten Ausführungsform kann das Wälzlager 20 auch am Außenring 22 oder Innenring 21 mit Bohrungen versehen sein, über die eine Vorspannung mittels Schrauben in die Lagerung eingebracht werden kann. Entsprechende Lager, insbesondere auch in O-Anordnung, von kleineren Windenergieanlagen, beispielsweise in der 3MW-Klasse, bekannt, werden dort jedoch als Lager unmittelbar bei der Rotornabe verwendet.

Der Planetenträger 14 ist weiterhin auf der von der Rotorwelle 2 abgewandten Seite des zweireihigen Wälzlagers 20 mit einem als Loslager ausgestalteten Stützlager 25 im Getriebegehäuse 16 gelagert. Da das zweireihige Wälzlager 20 mit dem Getriebegehäuse 16 verbunden ist und so ein Festlager gegenüber dem Getriebegehäuse 16 bildet, wird durch das Stützlager 25 eine Fest-Los-Lagerung des Planetenträgers 14 im Getriebegehäuse 16 erreicht. Es sind aber auch Ausführungen ohne Stützlager 25 möglich.

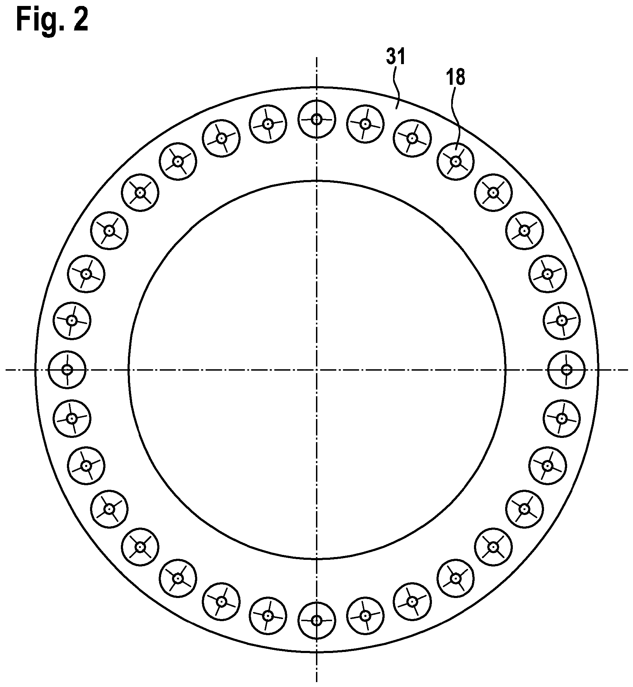

Das Gehäuse 16 ist über eine Vielzahl von elastischen Aufhängungselementen 18 an der zweiten, ringförmigen und die Rotorwelle 2 vollständig umschließende Tragstruktur 31 befestigt. Bei den elastischen Aufhängungselementen 18 handelt es sich um zylindrische Elemente aus Gummi, deren jeweilige Zylinderachse parallel zur Rotorachse ausgerichtet ist. Wie in Figur 2 skizziert sind insgesamt 32 elastische Aufhängungselemente 18 gleichverteilt um die Rotorwelle 2 angeordnet. Die Elastizität der Aufhängungselemente 18 ist dabei derart richtungsabhängig ausgestaltet, dass in Umfangsrichtung eine ausreichende Steifigkeit vorhanden ist, um das Getriebedrehmoment allein über die Aufhängungselemente 18 vollständig in die zweite Tragstruktur 31 zu leiten, sodass auf eine gesonderte Drehmomentstütze verzichtet werden kann. Gleichzeitig sollen über die Aufhängungselemente aber Biegeverformungen der Rotorwelle 2 aufgrund von Windlasten wenigstens teilweise ausgeglichen und die Übertragung von Vibrationen aus dem Getriebe 10 auf die zweite Tragstruktur 31 minimiert werden können.

## Patentansprüche

1. Windenergieanlage mit einem Maschinenträger (40) zur Aufnahme von Bauteilen zur Lagerung des Triebstrangs der Windenergieanlage, wobei der Maschinenträger (40) einen Flansch mit einem Lochbild (41) identisch zum Lochbild eines Azimutlagers der Windenergieanlage aufweist und eine Trägerplatte (50) vorgesehen ist, wobei die Trägerplatte (50) ein Lochbild (51) identisch zum Lochbild des Azimutlagers aufweist und derart zwischen Maschinenträger (40) und Azimutlager angeordnet ist, dass die Verschraubung des Maschinenträgers (40) am Azimutlager durch das Lochbild (51) der Trägerplatte (50) geführt ist,
**dadurch gekennzeichnet, dass**
die Trägerplatte (50) aus mehreren Segmenten zusammengesetzt ist.

2. Windenergieanlage nach Anspruch 1,
**dadurch gekennzeichnet, dass**
die Trägerplatte (50) zur Aufnahme von acht oder mehr Azimutantrieben (60) ausgestaltet ist und/oder jeweils ein Azimutantrieb (60) in jeder dafür vorgesehenen Aufnahme der Trägerplatte (50) vorgesehen ist.

3. Windenergieanlage nach Anspruch 1 oder 2,
**dadurch gekennzeichnet, dass**
die Trägerplatte (50) auf der von der Aufnahme der Azimutantriebe (60) abgewandten Seite wenigstens fünf, vorzugsweise wenigstens acht Aufnahmen für Azimutbremsen (61) aufweist, wobei vorzugsweise jeweils eine Azimutbremse (61) in jeder dafür vorgesehenen Aufnahme vorgesehen ist.

4. Windenergieanlage nach einem der vorhergehenden Ansprüche,
**dadurch gekennzeichnet, dass**
die Trägerplatte (50) aus einem Material mit gegenüber dem Material des Maschinenträgers (40) höherer Festigkeit ist.

5. Windenergieanlage nach einem der vorhergehenden Ansprüche,
**dadurch gekennzeichnet, dass**
- der Triebstrang (1) eine Rotorwelle (2) und ein Planetengetriebe (10) mit einer ersten Getriebestufe (11) umfasst, wobei die Rotorwelle (2) mit dem Planetenträger (14) der ersten Getriebestufe (11) fest und spielfrei verbunden ist,
- am Maschinenträger (40) wenigstens eine erste und eine zweite Tragstruktur (30, 31) befestigt ist, wobei
- an der ersten Tragstruktur (30) ein Toroidalrollenlager (5) zur Lagerung der Rotorwelle (2) auf einem von der ersten Getriebestufe (11) abgewandten Seite angeordnet ist und
- an der zweiten Tragstruktur (31) ein Gehäuse (16) des Planetengetriebes (10) über wenigstens drei ringförmig um die Rotorachse angeordnete elastische Aufhängungselemente (18) befestigt ist, wobei der mit der Rotorwelle (2) fest und spielfrei verbundene Planetenträger (14) mit einem Momentenlager (20) als Festlager gelagert ist, dessen Außenring (22) mit dem Gehäuse (16) verbunden ist.

6. Windenergieanlage nach Anspruch 5,
**dadurch gekennzeichnet, dass**
sechs oder mehr, vorzugsweise sechzehn oder mehr elastische Aufhängungselemente (18) vorgesehen sind, wobei die Aufhängungselemente (18) vorzugsweise über den Umfang gleichverteilt sind.

7. Windenergieanlage nach einem der Ansprüche 5 bis 6,
**dadurch gekennzeichnet, dass**
die elastischen Aufhängungselemente (18) zylindrisch sind und vorzugsweise mit ihrer Zylinderachse parallel zur Rotorachse angeordnet sind.

8. Windenergieanlage nach einem der Ansprüche 5 bis 7,
**dadurch gekennzeichnet, dass**
die Elastizität der elastischen Aufhängungselemente (18) richtungsabhängig derart ausgestaltet ist, dass in Umfangsrichtung der Rotorachse eine ausreichende Steifigkeit vorhanden ist, um das Getriebedrehmoment allein über die Aufhängungselemente (18) vollständig in die zweite Tragstruktur (31) zu leiten.

9. Windenergieanlage nach einem der Ansprüche 5 bis 8,
**dadurch gekennzeichnet, dass**
das Momentenlager (20) ein Gleitlager oder ein Wälzlager, vorzugsweise ein zweireihiges Kegelrollenlager mit Schrägstellung in X- oder O-Anordnung, ist.

10. Windenergieanlage nach Anspruch 9,
**dadurch gekennzeichnet, dass**
das Kegelrollenlager einen, vorzugsweise induktiv gehärteten, geteilten Innen- oder Außenring (22) aufweist, wobei die beiden Teile (23, 23') des geteilten Rings (22) vorzugsweise Bohrungen für eine Verschraubung aufweisen.

11. Windenergieanlage nach Anspruch 10,
**dadurch gekennzeichnet, dass**
der eine Teil (23) des geteilten Rings (22) gewindefreie Durchgangsbohrungen und der andere Teil (23'), vorzugsweise der vom Toroidalrollenlager (5) weiter entfernte Teil (23`) des geteilten Rings (22) Bohrungen mit Innengewinde aufweist.

12. Windenergieanlage nach einem der Ansprüche 5 bis 11,
**dadurch gekennzeichnet, dass**
der Planetenträger (14) der ersten Getriebestufe (11) auf der von der Rotorwelle (2) abgewandten Seite des Momentenlagers (20) mit einem als Loslager ausgestalteten Stützlager (25) zur Bildung einer Fest-Los-Lagerung des Planetenträgers (14) gelagert ist.

13. Windenergieanlage nach Anspruch 12,
**dadurch gekennzeichnet, dass**
das Stützlager (25) ein Wälzlager, vorzugsweise ein Zylinderrollenlager ist.

14. Windenergieanlage nach einem der Ansprüche 5 bis 13, **dadurch gekennzeichnet, dass**
das Gehäuse (16) das Getriebegehäuse des Planetengetriebes (10) ist.

## Claims

1. Wind turbine having a machine carrier (40) for receiving components for mounting of the drivetrain of the wind turbine, wherein the machine carrier (40) has a flange with a hole pattern (41) identical to the hole pattern of an azimuth bearing of the wind turbine, and a carrier plate (50) is provided, wherein the carrier plate (50) has a hole pattern (51) identical to the hole pattern of the azimuth bearing and is arranged between machine carrier (40) and azimuth bearing in such a way that the screw connection of the machine carrier (40) at the azimuth bearing is passed through the hole pattern (51) of the carrier plate (50),
**characterized in that**
the carrier plate (50) is made up of multiple segments.

2. Wind turbine according to Claim 1,
**characterized in that**
the carrier plate (50) is designed for receiving eight or more azimuth drives (60), and/or in each case one azimuth drive (60) is provided in each receiving part of the carrier plate (50) provided for this purpose.

3. Wind turbine according to Claim 1 or 2,
**characterized in that**,
on the side facing away from the receiving part of the azimuth drives (60), the carrier plate (50) has at least five, preferably at least eight, receiving parts for azimuth brakes (61), wherein preferably in each case one azimuth brake (61) is provided in each receiving part provided for this purpose.

4. Wind turbine according to one of the preceding claims, **characterized in that**
the carrier plate (50) is composed of a material with greater strength in comparison with the material of the machine carrier (40).

5. Wind turbine according to one of the preceding claims, **characterized in that**
- the drivetrain (1) comprises a rotor shaft (2) and a planetary gearing (10) with a first gearing stage (11), wherein the rotor shaft (2) is connected fixedly and without play to the planet carrier (14) of the first gearing stage (11),
- at least one first and one second carrier structure (30, 31) are fastened to the machine carrier (40), wherein,
- on the first carrying structure (30), there is arranged a toroidal-roller bearing (5) for mounting the rotor shaft (2) on a side facing away from the first gearing stage (11), and
- a housing (16) of the planetary gearing (10) is fastened to the second carrying structure (31) via at least three elastic suspension elements (18) that are arranged in an annular manner around the rotor axis, wherein the planet carrier (14) connected fixedly and without play to the rotor shaft (2) is mounted by way of a moment bearing (20), as fixed bearing, whose outer ring (22) is connected to the housing (16).

6. Wind turbine according to Claim 5,
**characterized in that**
six or more, preferably sixteen or more, elastic suspension elements (18) are provided, wherein the suspension elements (18) are preferably distributed in a uniform manner over the circumference.

7. Wind turbine according to either of Claims 5 and 6, **characterized in that**
the elastic suspension elements (18) are of cylindrical form and are preferably arranged with their cylinder axis parallel to the rotor axis.

8. Wind turbine according to one of Claims 5 to 7,
**characterized in that**
the elasticity of the elastic suspension elements (18) is configured in a direction-dependent manner in such a way that, in the circumferential direction of the rotor axis, sufficient stiffness is present for directing the gearing torque completely into the second bearing structure (31) solely via the suspension elements (18).

9. Wind turbine according to one of Claims 5 to 8,
**characterized in that**
the moment bearing (20) is a plain bearing or a rolling bearing, preferably a two-row tapered-roller bearing with oblique positioning in an X- or O-arrangement.

10. Wind turbine according to Claim 9,
**characterized in that**
the tapered-roller bearing has a preferably inductively hardened split inner or outer ring (22), wherein the two parts (23, 23') of the split ring (22) preferably have bores for a screw connection.

11. Wind turbine according to Claim 10,
**characterized in that**
one part (23) of the split ring (22) has thread-free passage bores, and the other part (23') of the split ring (22), preferably that part (23') thereof which is further away from the toroidal-roller bearing (5), has bores with an internal thread.

12. Wind turbine according to one of Claims 5 to 11,
**characterized in that**,
on that side of the moment bearing (20) which faces away from the rotor shaft (2), the planet carrier (14) of the first gearing stage (11) is mounted by way of a support bearing (25), in the form of a floating bearing, for forming a fixed-floating bearing arrangement of the planet carrier (14).

13. Wind turbine according to Claim 12,
**characterized in that**
the support bearing (25) is a rolling bearing, preferably a cylindrical-roller bearing.

14. Wind turbine according to one of Claims 5 to 13,
**characterized in that**
the housing (16) is the gearing housing of the planetary gearing (10).

## Revendications

1. Installation d'énergie éolienne avec un support de machine (40) pour recevoir des composants pour le montage de la ligne d'entraînement de l'installation d'énergie éolienne, le support de machine (40) présentant une bride avec une configuration de trous (41) identique à la configuration de trous d'un palier azimutal de l'installation d'énergie éolienne et une plaque de support (50) étant prévue, la plaque de support (50) présentant une configuration de trous (51) identique à la configuration de trous du palier azimutal et étant agencée entre le support de machine (40) et le palier azimutal de telle sorte que le vissage du support de machine (40) sur le palier azimutal est guidé par la configuration de trous (51) de la plaque de support (50),
**caractérisée en ce que**
la plaque de support (50) est composée de plusieurs segments.

2. Installation d'énergie éolienne selon la revendication 1, **caractérisée en ce que**
la plaque de support (50) est conçue pour recevoir huit entraînements azimutaux (60) ou plus et/ou un entraînement azimutal (60) est prévu dans chaque logement de la plaque de support (50) prévu à cet effet.

3. Installation d'énergie éolienne selon la revendication 1 ou 2,
**caractérisée en ce que**
la plaque de support (50) présente, sur le côté détourné du logement des entraînements azimutaux (60), au moins cinq, de préférence au moins huit logements pour des freins azimutaux (61), un frein azimutal (61) étant de préférence prévu dans chaque logement prévu à cet effet.

4. Installation d'énergie éolienne selon l'une quelconque des revendications précédentes,
**caractérisée en ce que**
la plaque de support (50) est en un matériau dont la résistance est supérieure à celle du matériau du support de machine (40).

5. Installation d'énergie éolienne selon l'une quelconque des revendications précédentes, **caractérisée en ce que**
- la ligne d'entraînement (1) comprend un arbre de rotor (2) et un engrenage planétaire (10) avec un premier étage d'engrenage (11), l'arbre de rotor (2) étant relié de manière fixe et sans jeu au porte-satellites (14) du premier étage d'engrenage (11),
- au moins une première et une deuxième structure porteuse (30, 31) sont fixées au support de machine (40),
- un palier à rouleaux toroïdaux (5) étant agencé sur la première structure porteuse (30) pour le montage de l'arbre de rotor (2) sur un côté détourné du premier étage d'engrenage (11) et
- un carter (16) de l'engrenage planétaire (10) étant fixé sur la deuxième structure porteuse (31) par l'intermédiaire d'au moins trois éléments de suspension élastiques (18) agencés de manière annulaire autour de l'axe du rotor, le porte-satellites (14) relié de manière fixe et sans jeu à l'arbre de rotor (2) étant monté étant monté avec un palier de couple (20) en tant que palier fixe, dont la bague extérieure (22) est reliée au carter (16).

6. Installation d'énergie éolienne selon la revendication 5, **caractérisée en ce que** six éléments de suspension élastiques (18) ou plus, de préférence seize ou plus, sont prévus, les éléments de suspension (18) étant de préférence répartis uniformément sur la circonférence.

7. Installation d'énergie éolienne selon l'une quelconque des revendications 5 à 6, **caractérisée en ce que** les éléments de suspension élastiques (18) sont cylindriques et sont de préférence agencés avec leur axe de cylindre parallèle à l'axe du rotor.

8. Installation d'énergie éolienne selon l'une quelconque des revendications 5 à 7, **caractérisée en ce que** l'élasticité des éléments de suspension élastiques (18) est conçue en fonction de la direction de telle sorte qu'il existe une rigidité suffisante dans la direction circonférentielle de l'axe du rotor pour que le couple de transmission soit entièrement transmis à la deuxième structure porteuse (31) par les seuls éléments de suspension (18).

9. Installation d'énergie éolienne selon l'une quelconque des revendications 5 à 8, **caractérisée en ce que** le palier de couple (20) est un palier lisse ou un palier à roulement, de préférence un palier à rouleaux coniques à deux rangées avec une position oblique selon l'agencement X ou O.

10. Installation d'énergie éolienne selon la revendication 9, **caractérisée en ce que**
le palier à rouleaux coniques présente une bague intérieure ou extérieure divisée (22), de préférence trempée par induction, les deux parties (23, 23') de la bague divisée (22) présentant de préférence des trous pour un vissage.

11. Installation d'énergie éolienne selon la revendication 10,
**caractérisée en ce**
**qu'**une partie (23) de la bague divisée (22) présente des trous traversants non filetés et l'autre partie (23'), de préférence la partie (23') de la bague divisée (22) la plus éloignée du palier à rouleaux toroïdaux (5), présente des trous avec un filetage intérieur.

12. Installation d'énergie éolienne selon l'une quelconque des revendications 5 à 11,
**caractérisée en ce que**
le porte-satellites (14) du premier étage d'engrenage (11) est monté, sur le côté du palier de couple (20) détourné de l'arbre de rotor (2), avec un palier de soutien (25) conçu sous forme de palier libre pour former un montage fixe-libre du porte-satellites (14).

13. Installation d'énergie éolienne selon la revendication 12, **caractérisée en ce que** le palier de soutien (25) est un palier à roulement, de préférence un palier à rouleaux cylindriques.

14. Installation d'énergie éolienne selon l'une quelconque des revendications 5 à 13, **caractérisée en ce que** le carter (16) est le carter d'engrenage de l'engrenage planétaire (10).
